(19) Europäisches Patentamt
European Patent Office
Office européen des brevets

(11) Publication number: 0 110 846 A1

(12) # EUROPEAN PATENT APPLICATION

(21) Application number: 83850281.3

(51) Int. Cl.³: C 01 F 7/00

(22) Date of filing: 26.10.83

(30) Priority: 02.11.82 SE 8206206

(43) Date of publication of application: 13.06.84 Bulletin 84/24

(84) Designated Contracting States: AT BE CH DE FR GB IT LI LU NL SE

(71) Applicant: Boliden Aktiebolag, Box 5508, S-114 85 Stockholm (SE)

(72) Inventor: Gunnarsson, Knut Lennart, Birkagatan 135, S-252 60 Helsingborg (SE)
Inventor: Nilsson, Rolf Olof, Ransviksvägen 14, S-260 42 Mölle (SE)

(74) Representative: Inger, Lars Ulf Bosson et al, Boliden AB Patent & Trade Marks Box 5508, S-114 85 Stockholm (SE)

(54) **A method for producing basic aluminium sulphate (II).**

(57) The present invention relates to a method for producing sulphate-poor, polynucleate aluminium hydroxide sulphate complexes of the general formula

$$[Al(OH)_x\ (SO_4)_y\ (H_2O)_z]_n$$

where
n is an integer,
x is 0.75-2.0;
y is 0.5-1.12;
x + 2y = 3,
z = 1.5-4, when the product is in solid form, and
z is ≥ 4, when the product is in the form of a solution.

The method is characterised by producing a solution containing polynucelate aluminium hydroxide sulphate complex of the formula

$$Al_m(OH)_n^{(3m-n)+}$$

by alkalizing aluminium sulphate with NaOH or $Na_2CO_3$, the solution being cooled to crystallize out $Na_2SO_4 \cdot 10\ H_2O$, and the crystals separated from the residual solution.

EP 0 110 846 A1

0110846

CCE 0728

1983-09-15

# A METHOD FOR PRODUCING BASIC ALUMINIUM SULPHATE

## DESCRIPTION

### Technical Field

The present invention relates to a method for producing polynucleate basic aluminium sulphate which gives in aqueous solution positively charged polynucleate complexes having charge-neutralizing properties in systems containing suspended or colloidal, negatively charged particles.

The object of the present invention is to provide a rational method for the industrial production of polynucleate basic aluminium sulphate.

### Background Art

A number of aluminium products which contain polynucleate aluminium ions in solution are known to the art. These products are the result of a requirement for more effective chemicals in, for example, the fields of water purification, paper siding, and plant de-watering. When used in these particular fields, the polynucleate products exhibit far superior qualities than do previously used simple compounds, due to the higher charge of the metal ions. In principle, two different kinds of aluminium products have been developed with the aim of improved efficiency in the aforesaid context; these products being firstly chlorid-based basic aluminium compounds and secondly sulphate-based aluminium compounds. Of the first mentioned group there was developed first a polyaluminium chlorid (PAC) of the general formula

$$\left[AlCl_x(OH)_{3-x}\right]_n$$

where x is $\lessdot$ 3, normally 1-2.

These compounds and methods for their manufacture have been described in, for example, SE,B,7 201 333-7, SE,B,7 405 237-4, SE,B,7 412 965-1, SE,B,7 503 641-8 and DE,A,2 630 768.

The other kind of aluminium chloride solutions, PALC, which are also based on a content of the same polynucleate complexes, have general summary formuli which can be written thus:

$$\left[ AlCl_3 \cdot x\ AOH \right]_n$$

where A is alkali metal, and

$$\left[ AlCl_3 \cdot \frac{x}{2}\ B(OH)_2 \right]_n$$

where B is an alkali earth metal, $\underline{n}$ is a positive integer, and $\underline{x}$ is a value within the range of 1-2.7.

Polynucleate aluminium-chloride solutions of the PALC-type are found described in FR,Al, 7 512 975, according to which the solutions are produced by alkalizing aluminium-chloride solutions with solutions of alkali hydroxide. According to this publication, however, it has not been possible to produce clear, stable solutions other than in a highly diluted state. By "stable solution" is menat here and in the following a solution which does not change with respect to compositon and properties, not even when stored for extended period of time. Thus, it is stated in the publication that under certain conditions, it is possible to obtain a solution with up to 0.40 moles of aluminium per litre. The stability of this solution, however, is greatly limited, and it is necessary to inject the solution directly into the water to be purified. It is clearly evident from the publication, and in particular from the working examples, that solutions having aluminium concentrations in excess of about 0.1 mole per litre cannot be expected to be effective and stable in the PALC-solutions known according to the publication.

Sulphate-based basic aluminium compounds are found described in EP,A, 79850039-3; EP,A, 80850033-4 and SE,A, 8101830-1.

These products have to a greater or lesser extent polynucleate metal--ions in solution, and are therefore effective water-purifying substances. The sulphate-based products can also be used for purposes

other than for purifying water, where the presence of the polynucleate metal ions favours the achievement of desired effects.

In certain cases, however, it is desirable, and at times even necessary, to restrict the supply of sulphate ions to the greatest possible extent with applications made in the aforementioned fields, particularly when purifying drinking water. This is particularly important in systems which are repeatedly used and cleansed in order to eliminate the risk of the accumulation of sulphate in tissues, and in water from the aspect of concrete corrosion. This, therefore, applies to certain water-purifying systems where there is a lack of water, rendering it necessary to use the water for as long as possible, with intermediate water-purifications. After having been cleansed ten times with conventional aluminium sulphate or compositions having corresponding sulphate contents (FALS), the sulphate content of such water is so high that the water will attack the water-piping system resulting in troublesome leakages. The problem of sulphate-ion enrichment has now also manifested itself in the papermaking industry, in which for environmental reasons the water system is closed to a large extent. Excessively high percentages of salts in the paper stock seriously disturb the manufacturing processes.

In US 4,238,347 there is proposed a method for producing a basic aluminium sulphate which is poor in sulphate and which has the formula

$$Al(OH)_x(SO_4)_y\ (H_2PO_4)_z\ (H_2O))_w$$

where x is 0.75-1.5;
y is 0.7-1.07;
z is 0-0.2; and
w is 2.0-4.2,
x + 2y + z being equal to 3.

The compounds are produced by reacting aluminium sulphate with ground calcium carbonate, optionally in the presence of phosphoric acid, and by filtering the reaction mixture to separate the gypsum formed.

It has been found, however, that the carbon dioxide departing from the reaction with the calcium carbonate, together with the gypsum, creates enormous problems with respect to process techniques, due to the foam formed, which, especially with high aluminium-sulphate concentrations, cannot be broken up. It is even impossible to break up effectively the foam when foam inhibitors are present. In fact, the use of foam inhibitors should be avoided, since they act as a contaminant in the different uses to which the aluminium sulphate is put. The calcium carbonate also reduces the stability of the product.

In SE,A, 8104149-3 there is described an improved method for producing sulphate-poor polynucleate aluminium hydroxide complexes of the formula

$$\left[ Al(OH)_x (SO_4)_y (H_2O)_z \right]_n$$

where n is an integer
x is 0.75-2.0;
y is 0.5-1.12;
x + 2y is 3 and
z is 1.5-4, z being $\leq 4$ when the product is in solid form and z being $\geqslant 4$ when the product is in solution, the aluminium sulphate being admixed with one or more of the compounds from the group CaO, $Ca(OH)_2$, BaO, $Ba(OH)_2$, SrO, $Sr(OH)_2$ in aqueous solution to the reaction to form the given compound, whereafter the resultant alkali earthmetal sulphate precipitate is separated out and the residual solution optionally vapourised. The resultant solution, which can be obtained with a high basicity, $OH/Al \leq 2.0$, has splendid properties, but the manufacture of the solution results in a waste, the alkali earthmetal sulphate, which is undesirable, since it constitutes up to 30% of the reaction mixture at a basicity of 2.0. A search has therefore been made for other methods which give no waste or which yield a residual product which has its own market value.

## Brief Description of the Invention

It has now been found possible to eliminate these technical problems

and to provide in a rational and simple manner a sulphate-poor, basic aluminium sulphate of the general formula

$$\left[ Al(OH)_x \, (SO_4)_y \, (H_2O)_z \right]_n$$

where n is an integer

x is 0.75-2.0

y is 0.5-1.12

x + 2y is 3

z is 1.5-4, when the product is in solid form and

z is $\gg$ 4, when the product is in the form of an aqueous solution.

The method according to the invention is characterised in that a solution containing a polynucleate aluminium hydroxid sulphate complex of the formula

$$Al_m \, (OH)_n^{(3m-n)+}$$

in which the anion is $(SO_4)^{(3m-n)-}_{(3m-n)/2}$

where m and n are integers and which is produced by alkalizing aluminium sulphate with an alkali from the group NaOH and $Na_2CO_3$, is cooled to precipitation of $Na_2SO_4 \cdot 10H_2O$, which is separated from the solution and the residual solution is optionally concentrated or dried to a solid product by vapourization.

Further characteristic features of the invention are set forth in the accompanying claims.

Particularly preferred compounds are those in which

x is 1.6-1.8

y is 0.5-0.7; and in solid form in which case

z is 2.0-2.5.

The compound exists in the form of a polynucleate complex in aqueous solution and should also exist in the same form in the solid product.

## The best mode of carrying out the invention

The compound according to the invention can be produced in accordance with the following:

As beforementioned, the starting material from which the compound according to the invention is produced is a polynucleate aluminium hydroxid sulphate complex, the manufacture of which is described more clearly in, inter alia, SE,A, 8101830-1.

According to SE,A, 8101830-1, a carbonate or hydrogen carbonate of alkali metal and an aluminium sulphate are brought to aqueous solution, the amount of aluminium sulphate being selected so that a given total aluminium content of between 0.2 and about 2 moles per litre is obtained in the solution, and the amount of carbonate or hydrogen carbonate being so selected in relation to the amount of aluminium sulphate that the ratio between the number of moles OH and the total number of moles aluminium in the resulting solution does not greatly exceed the value determined by the associated values:

| Mole Al per litre | Mole ratio OH/Al |
|---|---|
| 0.2 | 1.5 |
| 0.5 | 1.6 |
| 1.0 | 1.7 |
| 1.9 | 1.5 |
| 2.0 | 1.4 |

### Example 1

Manufacture of polynucleate aluminium hydroxide and sulphate complex

67.2 grams of $Na_2CO_3$ were mixed in a dry state with 232.8 grams of granular aluminium sulphate. 700 ml av water were added to the mixture and the mixture dissolved whilst stirring with a magnetic agitator for 60 minutes during the generation of carbon dioxide, whereafter a clear solution was obtained. The solution had a volume of 824 ml with a density $\rho$ = 1.18 and contained 0.90 mole of aluminium per litre, of which 68% existed as a polynucleate complex (OH/Al = 1.7).

Manufacture of sulphate-poor polynucleate aluminium hydroxide sulphate complex

The polynucleate aluminium hydroxide sulphate solution obtained in accordance with the above was cooled to $0^{o}C$, whereupon 172 grams of $Na_2SO_4 \cdot 10H_2O$ were precipitated, this quantity corresponding to 90% of the ingoing sodium ions, and a sulphate-poor polynucleate aluminium hydroxid sulphate solution with $SO_4/Al = 0.75$ was obtained.

Example 2

A polynucleate aluminium sulphate solution was prepared in accordance with SE,A, 7805135-6, a solution of aluminium sulphate, which was 0.2 M with respect to aluminium, was admixed with 1.5 M NaOH per mole of aluminium, to a pH of 4.5, there being obtained a polynucleate aluminium hydroxide sulphate complex in solution. This solution was then admixed with sodium citrate in an amount corresponding to 0.08 mole citrate per mole aluminium, the complex being stabilised thereby.

The thus stabilised solution of polynucleate aluminium hydroxide sulphate complex was cooled to $0^{o}C$, $Na_2SO_4 \times 10\ H_2O$ crystallising out in an amount corresponding to 90% of the sodium content. The residual solution comprised a sulphate-poor, polynucleate aluminium hydroxide sulphate complex having an $SO_4/Al$-ratio of 0.75.

Example 3

A sulphate-poor, polynucleate aluminium hydroxide sulphate complex was produced in accordance with example 1 above, but with the exception that 0.08 mole of sodium citrate per mole aluminium was added to the starting solution prior to crystallising out $Na_2SO_4 \cdot 10\ H_2O$. The final solution contained 2.0 OH/Al and 0.5 $SO_4/Al$. The solution contained 1.5 moles aluminium per litre.

Example 4

A polynucleate aluminium hydroxide sulphate solution was prepared in accordance with example 1 above, the alkalizing stage being effected at a temperature of $70^{o}C$ over a period of one hour, the solution then

being cooled to $5^oC$ for crystallising out sodium sulphate. In this way there was obtained a solution which was 7% with respect to aluminium and which had a density of 1.5. OH/Al = 1.6. $SO_4$/Al = 0.75.

The resultant sulphate-poor aluminium hydroxide sulphate complexes are not stable when stored in solution from over extended periods of time, the aluminium compound present decomposing to form insoluble aluminium salts. As it is stated above, sodium citrate/citric acid has a stabilising effect. Other stabilising substances are $\alpha$-hydroxy carboxylic acids in addition to citric acid, tartaric acid, lactic acid, glycolic acid, hydroxy succinic acid. Other stabilising substances are sodium acetate, carbonates, sugar acids and the salts thereof, such as sodium heptonate.

The stabilising agent is added in an amount which at most, with respect to $\alpha$-hydroxy carboxylic acids, corresponds to half the number of equivalents of the acid.

Na-heptonate is normally used in an amount corresponding to 1-2% of the solution.

The aforementioned 7%-solution can be diluted down to a concentration of 2% calculated as aluminium, although lower concentrations should be avoided, because this will result in excessively reduced stability, even when a stabiliser is present.

As beforementioned, the 7%-solution produced in accordance with the foregoing is unstable due to prevailing equilibrium conditions, a conversion to water-insoluble aluminium compounds taking place. The speed at which this conversion takes place depends upon temperature, the conversion rate increasing with increasing temperature.

Despite this, however, it is possible to vapourize the solution to a stable, dry solid product, which is soluble in water and which

provides solutions with retained properties compared with the properties of the original solution. When the dry product is again dissolved, it is possible that the properties of the solution will be impaired, although they are fully sufficient for practical, technical use, for example, for use in a papermaking system.

When vapourizing the solution, the temperature should not exceed 70$^{o}$C, and the vapourizing time should be restricted as far as possible, by suitable selection of a vapourizing means, such as a thin-film evaporator with good air ventilation. Such an evaporator produces a brittle cake, which disintegrates into an X-ray amorphous product.

In order to obtain the lowest possible sulphate content, and therewith the highest possible basicity, it is preferred to work with concentrated solutions. These solutions should be at least 0.5M preferably above 1M with respect to aluminium when alkalizing and crystallizing out the product.

Further, it has been found that when the alkalizing step is carried out at elevated temperatures, at least 50$^{o}$C for at least one hour, $Na_2SO_4 \cdot 10\ H_2O$ is crystallised out more rapidly, cooling to 5-10$^{o}$C being sufficient.

Since solutions having polynucleate aluminium hydroxide sulphate complexes of high basicity can be readily manufactured with soda (if no stabilising agent is present) soda is preferred as the alkalizing agent. The solution passing to crystallization for crystallizing out $Na_2SO_4 \cdot 10\ H_2O$ should have a basicity of 1.5(OH/Al = 1.5) at aluminium concentrations $>$ 1M in order to produce the best commercial final products.

The products produced in accordance with the invention possess good properties with respect to neutralizing the charges in colloidal systems, which results in good coagulation and rapid flocculation in

water-pyrifying processes, and good retention in papermaking processes. Since the product is poor in sulphur, it can be used to advantage in papermaking industries, having closed white-water systems, to eliminate the undesirable accumulation of sulphate ions. Excessively high quantities of sulphate ions block the desired surface-chemical reactions.

CLAIMS

1. A method for producing sulphate-poor, polynucleate aluminium hydroxid sulphate complexes of the general formula

$$\left[ Al(OH)_x \ (SO_4)_y \ (H_2O)_z \right]_n$$

where n is an integer

x is 0.75-2.0, preferably 1.5-2.0

y is 0.5-1.12, preferably 0.5-0.75

x + 2y = 3, and

z is 1.5-4, when the product is in solid form and

z is $\geqslant$ 4, when the product is in the form of an aqueous solution,

characterised in that a solution containing polynucleate aluminium hydroxide sulphate complex of the formula

$$Al_m \ (OH)_n^{(3m-n)+} \text{ with sulphate anion,}$$

in which m and n are integers, produced from aluminium sulphates alkalized with NaOH or $Na_2CO_3$, is cooled to crystallize out $Na_2SO_4 \cdot 10\ H_2O$, which is separated from the solution, and the residual solution, if so desired, is converted to a solid product.

2. A method according to claim 1, characterised in that a solution containing the said polynucleate aluminium hydroxide complex has a concentration of at least 0.5M with respect to aluminium.

3. A method according to claim 2, characterised in that the concentration is at least 1M with respect to aluminium.

4. A method according to claims 1-3, characterised in that alkalization is effected at elevated temperatures.

5. A method according to claim 4, characterised in that the temperature is at least 50°C

6. A method according to claims 1-5, characterised in that alkalization is effected over a period of at least 1 hour at elevated temperatures prior to cooling the solution.

7. A method according to one or more of claims 1-6, characterised in that the ingoing solution of polynucleate aluminium hydroxide sulphate complex is stabilised with a stabilising agent taken from the group $\alpha$-hydroxycarboxylic acids, sugars and sugar acids, prior to cooling and crystallizing out.

8. A method according to claim 7, characterised in that the product obtained after crystallization is vapourised to a concentration of 10% with respect to aluminium.

European Patent Office

# EUROPEAN SEARCH REPORT

0110846

Application number

83850281.3

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| A | SE-B-385 687 (TAKI FERTILIZER MANUFACTORING CO) | | C 01 F 7/00 |
| A | SE-B-376 597 (TAKI FERTILIZER MANUFACTORING AC) | | |
| X | SE-A-8101830-1 (BOLIDEN AB) *claim 3* | 1 | |
| X | SE-A-8104149-3 (BOLIDEN AB) * claim 1* | 1 | |
| X | US-A-4 238 347 (ALAN B GANCY) *claim 5* | 1 | |
| A | EP-A-005 419 (BOLIDEN AB) | | |

TECHNICAL FIELDS SEARCHED (Int. Cl. 3)

C 01 F 7/00
7/02
7/34
7/74

The present search report has been drawn up for all claims

| Place of search | Date of completion of the search | Examiner |
|---|---|---|
| Stockholm | 27-01-1984 | LUNDELL B-M |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03.82